# EUROPEAN PATENT SPECIFICATION

(11) **EP 3 560 096 B1**
(45) Date of publication and mention of the grant of the patent: **08.06.2022**
(21) Application number: 17818179.8
(22) Date of filing: 22.12.2017
(51) Int. Cl.: B60L 50/50

(54) **HYBRID DRIVE SYSTEM FOR TRACTION VEHICLE**
HYBRIDANTRIEBSSYSTEM FÜR TRIEBFAHRZEUG
SYSTÈME D'ENTRAÎNEMENT HYBRIDE POUR VÉHICULE DE TRACTION

(30) Priority: 22.12.2016 EP 16206254
(43) Date of publication of application: 30.10.2019
(73) Proprietor: ABB Schweiz AG, 5400 Baden (CH)
(72) Inventor: EHRLER, Urs, 5412 Gebensdorf (CH)
(74) Representative: Qip Patentanwälte Dr. Kuehn & Partner mbB
(86) International application number: PCT/EP2017/084314
(87) International publication number: WO 2018/115404

(56) References cited:
- EP-A1- 2 884 657
- EP-B1- 2 884 657
- DE-A1-102012 203 528
- US-A- 6 023 137
- US-A1- 2010 071 970
- US-A1- 2011 094 841
- US-A1- 2011 094 841
- US-A1- 2013 140 121

## Description

### FIELD OF THE INVENTION

The invention relates to the field of traction vehicles. In particular, the invention relates to a drive system for a traction vehicle.

### BACKGROUND OF THE INVENTION

Traction vehicles, such as trains and trams are often driven with power from an external electrical network. Most of the electrical networks provide a one phase AC current. However, there are also networks providing a DC current. Such traction vehicles have a drive system, in which the input current is converted into one or more AC currents, which are supplied to drive motors of the traction vehicle.

Another possibility is that the traction vehicle has an internal diesel generator, in which a diesel motor drives an electrical generator which provides the electrical current for the drive motors. Usually, the generator is adapted for generating a three-phase AC current, which is rectified and then converted into AC currents to be supplied to the drive motors.

For example, US 2012 0 303 237 A1 shows an electric system of a locomotive having a three-phase generator.

US 2011/094 841 A1 and US 2013/140 121 A1 relate to mining trucks, which have an internal Diesel engine that drives a three-phase generator, which supplies inverters via one rectifier with electric energy. A DC link between the rectifier and the inverters may be supplied via a pantograph.

US 6 023 137 A relates to an electric propulsion system for diesel electric vehicles, such as a locomotive, with an electric generator having a stator with three star-connected phases and a Diesel engine driving the generator.

DE 10 2012 203 528 A1 and US 2010/071 970 A1 relate to electric vehicles with an electrical motor that comprises two star-connected three-phase stator windings. In US 2010/071 970 A1 the two star-connected winding systems are isolated.

### DESCRIPTION OF THE INVENTION

It is an objective of the invention to provide a powerful, efficient and comparable small drive system for an electrical vehicle.

This objective is achieved by the subject-matter of the independent claims. Further exemplary embodiments are evident from the dependent claims and the following description.

The invention relates to a drive system for a traction vehicle. A traction vehicle may be any vehicle running on rails, such as a train or a tram. The drive system may be integrated into a locomotive, i.e. a wagon solely intended for driving the traction vehicle, and/or into a passenger wagon.

According to an embodiment of the invention, the drive system comprises a fuel powered motor; a generator driven by the fuel powered motor, the generator being adapted for generating a multi-phase AC current, when driven by the fuel powered motor and two generator side inverters supplied by the generator. Furthermore, the generator has two or more galvanically separated stator winding systems, each stator winding system supplying one of the generator side inverters.

The drive system may comprise one combination of fuel powered motor and generator, which supplies two inverters with electrical power. The fuel powered motor and the generator may be mechanically interconnected by one shaft. The fuel powered motor may be a combustion motor.

The generator has a special kind of stator, which comprises at least two separate stator winding system for each of the generator side inverters. Each of the inverters may generate a DC current from the AC current produced by the generator. Due to the double winding system, only one generator may be needed for generating the power to be supplied to two inverters. Furthermore, only one fuel powered motor is necessary. Thus, the number of mechanical components and thus the space occupied by the drive system as well as the costs may be reduced.

A stator winding system may be seen as electrical interconnected components of the stator, in which the rotor induces electrical currents, when turning. The rotor of the generator may be mechanically interconnected with above mentioned shaft for connecting the generator with the fuel powered motor. On the other hand, the two stator winding systems are not electrically connected, i.e. are galvanically separated, at least inside the generator.

Each of the stator winding systems may provide a three phase system for the respective inverter. Each stator winding system may be composed of three phase windings.

Furthermore, the drive system comprises two DC links, and two or more drive motor side inverters, wherein each generator side inverter supplies one of the DC links, which is interconnected with one of the drive motor side inverters. Only one fuel powered motor and one generator may supply two or more independent DC links.

A DC link may comprise one or more DC link capacitors for storing electrical energy. Furthermore, auxiliary converters for heating, battery charging etc. may be interconnected with one or more of the DC links.

A generator side inverter may be a bridge converter based on parallel connected half-bridges. The generator side inverter may be an active rectifier.

Each drive motor side inverter supplies at least one, at least two or more drive motors. For each associated drive motor, the respective drive motor side inverter may provide three output phases with the AC current for the respective drive motor or for paralleled drive motors. A motor side inverter may be a bridge converter based on parallel connected half-bridges.

Each DC link is interconnectable with a DC supply network for supplying the traction vehicle with DC power. Both DC links may be interconnected with the same DC supply network. The traction vehicle may be seen as hybrid vehicle that may be powered by external electrical power and/or by the internal fuel powered motor. For example, the positive phase of an electrical DC network may be directly connected to the DC links of the drive system. In particular, the DC links may be galvanically connected.

According to an embodiment of the invention, the stator winding systems are designed for generating the same output voltage. In such a way, the DC links may be supplied with the same voltage and may be interconnected with one DC supply network. No further means for converting the voltage of the DC supply network into the voltage of each DC link may be necessary.

According to an embodiment of the invention, the stator winding systems have phase windings with equal winding numbers. This may result in stator winding systems generating the same output voltage.

According to an embodiment of the invention, each stator winding system of the generator has three phases, which are star-connected. The phase windings of each stator winding system may be interconnected at one end and may provide a phase output, to which the respective generator side inverter is connected, at the other end.

In such a way, the drive system may be seen as a double star system. The traction vehicle may have an internal generator powered by a fuel powered motor. The internal generator has a stator with two galvanically separated winding systems, i.e. the galvanically separated stator winding systems, that each supplies a separate generator side inverter.

According to an embodiment of the invention, the two stator winding systems have an electrical angle of 30° with respect to each other. The electrical angle between the stator winding systems may be defined as the phase shift between corresponding phases of the two stator winding systems. In the case of a three-phase system, each stator winding system may be adapted for generating a three-phase current, which three phases that are phase shifted by 120° with respect to each other.

However, also an electrical angle of 60° between the stator winding systems also may be possible. A 30° shift between the two stator winding systems may result in more time instants with zero crossings of the phase currents as in the 60° case, which may result in a better suppression of harmonics.

It may be that the drive system is controlled in such a way that it is powered by both the electrical DC network and the fuel powered generator. In this case, a controller or control system may balance the power drawn from the electrical network and the power supplied by the fuel powered motor.

According to an embodiment of the invention, the drive system comprises two controllers, each controller being adapted for controlling one of the generator side inverters. Each controller also may control the respective motor side inverter. Here and in the following, a controller may refer to a control unit, i.e. a separate device. The control system of the drive system may comprise a separate controller for each generator side inverter. A controller may comprise a processor, a DSP, an FPGA and/or other electronics for performing a control method. The two controllers may substantially be designed equal and/or may run equal software.

According to an embodiment of the invention, the controllers are adapted for synchronizing each other, such that they are adapted for generating synchronized switching signals, which are synchronized, for example below 20 µs. In other words, the two controllers may have internal clocks that are synchronized with each other and that deviate from each other not more than the above mentioned time intervals. It has to be noted that synchronized switching signals do not need to provided equal or nearly equal switching time instants but are generated based on synchronized clocks.

The motor side inverters and/or the generator side inverters may be switched based on pulse width modulation. Usually, a pulse width modulation method is based on carrier signals, which determine the switching time instants of the inverter. Since the two generator side inverters are galvanically coupled via the stator winding systems, a synchronization of the two independent generator side inverters and/or their carrier signals may be necessary. Due to the switching frequency which may be several 100 Hz, such a synchronization may mean that the carrier signals of the two controllers do at least deviate the above mentioned time intervals from each other.

According to an embodiment of the invention, the controllers are interconnected with a first data communication line adapted for transferring data within 50 µs. For getting a synchronization accuracy of below 50 µs, the data transfer speed should be at least within that accuracy. For example, the two controllers may be interconnected with a fast communication line based on fibre optics.

According to an embodiment of the invention, the controllers are interconnected with a second data communication line adapted for slower data communication as the first data communication line. For transferring other data, i.e. data not needed for synchronization, other communication lines may be used. For example, the second data communication line may be a CAN bus or other bus system.

According to an embodiment of the invention, the controllers are adapted for synchronizing each other as a master controller and a slave controller, wherein the master controller is adapted for evaluating measurement signals from the drive system, determining reference signals for stator voltages and/or a stator currents for both stator winding systems and for generating switching signals for its corresponding inverter(s).

The measurement signals may include the magnitudes and phases of the AC currents produced by the generator, the DC link voltages of both DC links, the speed and/or torque produced by the fuel powered motor, etc.

The reference signals may be reference signals (such as magnitude and phase) for the AC voltages converted by the generator side inverters into the DC voltages of the DC links.

Furthermore, the master controller may generate the switching signals for its inverter(s), but not for the inverter(s) of the slave controller.

According to an embodiment of the invention, the slave controller is adapted for synchronizing with the master controller, receiving reference signals for the stator voltages and/or stator currents and for generating switching signals for its corresponding inverter(s). The slave controller need not evaluate measurement signals and/or may not determine reference signals on its own.

According to an embodiment of the invention, each controller is adapted for additionally controlling a corresponding drive motor side inverter. It may be that the controller of a generator side inverter also controls the drive motor side inverter, which is interconnected via one of the DC links with the generator side converter.

According to an embodiment of the invention, the fuel powered motor has a further controller adapted for controlling an output power of the fuel powered motor. The fuel powered motor may have a controller of its own that may be provided with a speed reference signal and/or a power reference signal. Such a reference signal may be provided by the master controller and/or one of the inverter controllers for controlling the output power of the fuel powered motor.

According to an embodiment of the invention, the fuel powered motor is a diesel motor. However, it also may be possible that the fuel powered motor may be supplied with gasoline or gas.

According to an embodiment of the invention, the generator is a three-phase induction machine or a synchronous electrical machine. A synchronous electrical machine may be an electrical machine for which the rotor speed is synchronized with the frequency of the currents.

According to an embodiment of the invention, the fuel powered motor is startable by the generator, which is supplied with an AC current via at least one of the generator side inverters. For example, one or more of the DC links may be charged by the external DC supply network. The controller of the corresponding generator side inverter then may switch the inverter in such a way that the generator operates in motor mode and power from the DC link is supplied to the generator, which starts to turn and which starts the fuel powered motor. No additional starting device may be needed.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.

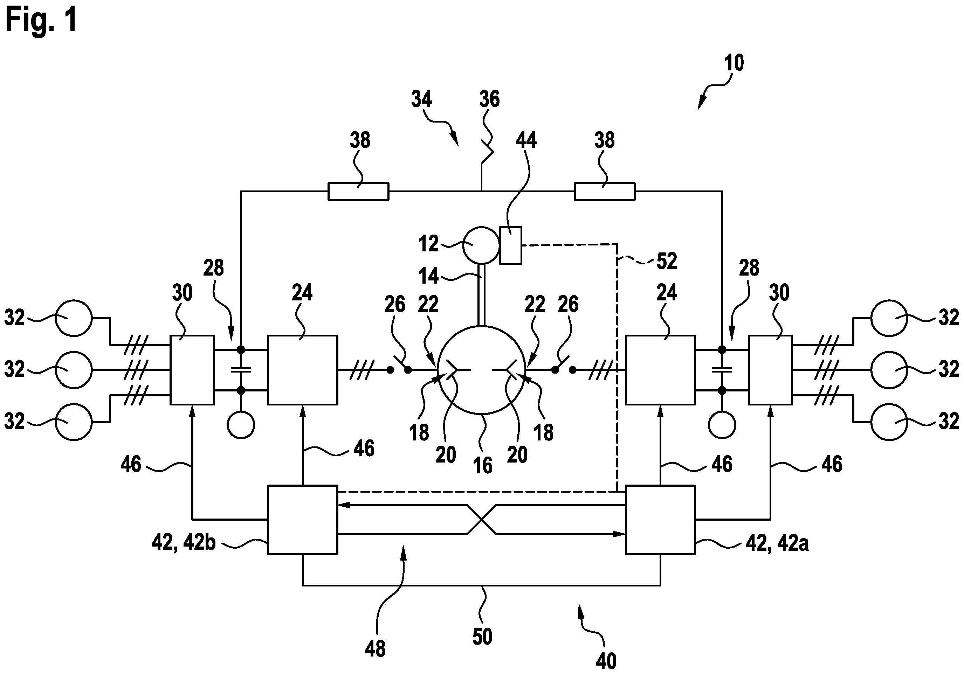

Fig. 1 schematically shows a drive system according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

Fig. 1 shows a drive system 10 for a traction vehicle. All the components described in the above and in the below of the drive system may be housed inside a wagon of the traction vehicle, such as a locomotive.

The drive system comprises a fuel powered motor 12, such as a diesel motor, that is mechanically connected via a shaft 14 with an electrical generator 16, which may be a three-phase induction or a synchronous machine. The shaft of the fuel powered motor 12 may be directly or indirectly (i.e. via a gear) connected with the rotor of the generator 16, which is rotating within a stator, which comprises two galvanically separated stator winding systems 18.

Each of the stator winding systems 18 comprises a phase winding 20 for each output phase of the generator 16. In the present case, the generator has two three-phase outputs 22 and/or each stator winding system 18 has three phase windings 20. The phase windings 18 are star-connected to form the respective stator winding system 18.

Each of the stator winding systems 18 is connected via one of the outputs 22 of the generator 16 with an inverter 24. A switch 26 may be provided between every output 22 and the respective inverter 24, which switch 26 may be used to disconnect an inverter 24 from the respective output 22. For example, when one of the inverters 24 is not operating properly, only the other inverter 24 may be used for driving the traction vehicle.

Each of the generator side inverters 24 is connected via a DC link 28 with a drive motor side inverter 30, i.e. the drive system 10 has two separate generator side inverters 24, two separate DC links 28 and two separate motor side inverters 30. Each DC link 28 has a capacitor for storing electrical energy in the DC link 28.

Each generator side inverter 24 may be an active rectifier, which converts a variable frequency AC current from the generator 16 into a DC current supplied to the DC link 28. For example, a generator side inverter 24 may be based on half-bridges, which are connected in parallel to the DC link 28.

Each of the drive motor side inverters 30 may be connected to a plurality of drive motors 32, which may be electrically motor adapted for driving the traction vehicle. The drive motors 32 may be mechanically connected to axles and/or wheels of the traction vehicle. The DC voltage from the DC link 28 may be converted by the respective motor side inverter 30 into a plurality of three-phase AC currents for the drive motors 32. Also each drive motor side inverter 30 may be based on half-bridges connected in parallel to the respective DC link 28.

The traction vehicle may be a hybrid vehicle, i.e. may be powered by the fuel powered motor 12 and by an external electrical network 34, which provides a DC voltage to the traction vehicle. For example, the traction vehicle may be electrically connected to the electrical network 34 via a catenary line 36. The DC voltage from the electrical network 34 may be supplied directly to the DC links 28. Each DC link 28 may be directly connected to the electrical network 34, for example via a filtering inductor 38 adapted for filtering voltage peaks out of the DC voltage from the electrical network 34.

It may be that the traction vehicle is powered by the electrical network 34 alone. In this case, the fuel powered motor 12 may be stopped and/or the inverters 24 may be switched into a mode, in which they block any power transfer between the generator 16 and the corresponding DC link 28.

It also may be that the traction vehicle is powered alone by the fuel powered motor 12, which may be the case, when the electrical network 34 is down or the traction vehicle is not connected to the electrical network.

It also may be that the traction vehicle is powered by both of the electrical network 34 and the fuel powered motor 12. In this case, the power from the electrical network 34 may be supplemented with power from the fuel powered motor 12.

Fig. 1 also shows the control system 40 of the drive system 10, which control system 40 comprises two inverter controllers 42 and a motor controller 44.

The inverter controllers 42 may be equally designed and/or may contain the same software. Each inverter controller 42 is associated with one converter branch of the drive system 10, i.e. a generator side inverter 24, the corresponding DC link 28 and the corresponding drive motor side inverter 30. The inverter controller 42 may generate the switching signals 46 for the generator side inverter 24 and the drive motor side inverter 30.

The inverter controllers 42 may be interconnected by a faster data communication line 48 and by a slower data communication line 50. For example, the data communication line 48 may be based on fibre optics and/or on serial communication channels, which are adapted for transferring data in such a way that the two inverter controllers are adapted for timely synchronizing each other. For example, the two inverter controllers 42 may be adapted for timely synchronizing each other, such that they are adapted for producing synchronic switching signals 46. This may be necessary, since the two inverter branches and in particular the generator side inverters 24 are low inductively coupled by the two stator winding systems 18.

The data communication line 50 may be based on a bus system, such as a CAN bus.

The motor controller 44 may be connected with both controllers 42a and 42b, for example also via a CAN bus as provided by the data communication line 50.

Furthermore, the inverter controllers 42 are adapted for synchronizing each other as a master controller 42a and a slave controller 42b. It may be that every one of the inverter controllers 42 may take the role of the master controller 42a.

The master controller 42a is adapted for evaluating measurement signals from the drive system 10, in particular, voltages and/or currents, such as the DC link voltage of both of the DC links 28 and the AC currents provided by the generator 16.

The master controller 42a then may determine reference signals for stator voltages for both stator winding systems 18. For example, the reference signals may comprise the magnitude and/or the phase angle of each phase of the stator voltage.

From these reference signals, the switching signals 46 for the inverters 24 may be generated. This may be performed by the respective inverter controller 42.

Furthermore, the reference signals may be sent from the master controller 42a to the slave controller 42b, for example via the data communication line 48 and/or via the data communication line 50.

The slave controller is adapted receiving the reference signals for the stator voltage and for generating switching signals 46 for its corresponding inverter 24.

The motor controller 44 is adapted for controlling an output power of the fuel powered motor 12. For example, the master controller 42a may determine an overall needed power for the whole vehicle and/or for the drive system 10 and may send a reference signal 52 about the needed power and/or a corresponding motor speed to the motor controller 44. The motor controller 44 then sets the speed of the fuel powered motor 12 accordingly. Basically, the needed power may be provided by a superordinated control system, which is responsible for setting the speed and/or the tractive effort of the traction vehicle.

Furthermore, the fuel powered motor 12 may be started by the generator 16 without the need for an additional start-up system. For example, one or both of the DC links 28 may be loaded with the aid of the electrical network 34 and one or both inverters 24 may be controlled to transfer power from the DC link(s) to the generator 16. The generator 16 may then operate in motor mode and may turn the fuel powered motor 12 until it starts.

While the invention has been illustrated and described in detail in the drawings and foregoing description, such illustration and description are to be considered illustrative or exemplary and not restrictive; the invention is only defined by the appended claims. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: drive system
- 12: fuel powered motor
- 14: shaft
- 16: electrical generator
- 18: stator winding system
- 20: phase winding
- 22: outputs
- 24: generator side inverter
- 26: switch
- 28: DC link
- 30: drive motor side inverter
- 32: drive motor
- 34: electrical network
- 36: catenary line
- 38: filtering inductor
- 40: control system
- 42: inverter controller
- 42a: master controller
- 42b: slave controller
- 44: motor controller
- 46: switching signals
- 48: faster data communication line
- 50: slower data communication line
- 52: power reference signal

## Claims

1. A drive system (10) for a traction vehicle, the drive system (10) comprising:
a fuel powered motor (12);
a generator (16) driven by the fuel powered motor (12), the generator (16) being adapted for generating a multi-phase AC current, when driven by the fuel powered motor (12);
two generator side inverters (24) supplied by the generator (16);
two DC links (28) interconnectable with a DC supply network (34) for supplying the traction vehicle with DC power;
two drive motor side inverters (30);
a plurality of drive motors (32) of the vehicle supplied by the drive motor side inverters (30);
**characterised in that**
each generator side inverter (24) supplies one of the DC links (28), which is interconnected with one of the drive motor side inverters (30);
the generator (16) has two galvanically separated stator winding systems (18). each stator winding system (18) supplying one of the generator side inverters (24);
the drive system (10) comprises two controllers (42), each controller (42) being adapted for controlling one of the generator side inverters (24);
the controllers (42) are adapted for synchronizing each other as a master controller (42a) and a slave controller (42b);
the master controller (42a) is adapted for evaluating measurement signals from the drive system (10), determining reference signals for stator voltages for both stator winding systems (18) and for generating switching signals (46) for its corresponding generator side inverter (24);
the slave controller (42b) is adapted for synchronizing with the master controller (42b), receiving reference signals for the stator voltages and for generating switching signals (46) for its corresponding generator side inverter (24).

2. The drive system (10) of claim 1,
wherein the stator winding systems (18) are designed for generating the same output voltage.

3. The drive system (10) of claim 1 or 2,
wherein the stator winding systems (18) have phase windings (20) with equal winding numbers.

4. The drive system (10) of one of the preceding claims,
wherein each stator winding system (18) of the generator (16) has three phases, which are star-connected.

5. The drive system (10) of one of the preceding claims,
wherein the two stator winding systems (18) have an electrical angle of 30° with respect to each other.

6. The drive system (10) of one of the preceding claims,
wherein the controllers (10) are adapted for synchronizing each other, such that they are adapted for generating synchronized switching signals (46), which are synchronized below 50 µs.

7. The drive system (10) of one of the one of the preceding claims,
wherein the controllers (42) are interconnected with a first data communication line (48) adapted for transferring data within 50 µs;
wherein the controllers (42) are interconnected with a second data communication line (50) adapted for slower data communication as the first data communication line (48).

8. The drive system (10) of one of the preceding claims,
wherein each controller (42) is adapted for additionally controlling a corresponding drive motor side inverter (30).

9. The drive system (10) of one of the preceding claims,
wherein the fuel powered motor (12) has a further controller (44) adapted for controlling an output power (52) of the fuel powered motor (12).

10. The drive system (10) of one of the preceding claims,
wherein the fuel powered motor (12) is a diesel motor.

11. The drive system (10) of one of the preceding claims,
wherein the generator (16) is a three-phase induction machine or a synchronous electrical machine.

12. The drive system (10) of one of the preceding claims,
wherein the fuel powered motor (12) is startable by the generator (16), which is supplied with an AC current via at least one of the generator side inverters (24).

## Patentansprüche

1. Antriebssystem (10) für ein Triebfahrzeug, wobei das Antriebssystem (10) Folgendes umfasst:
einen kraftstoffbetriebenen Motor (12);
einen durch den kraftstoffbetriebenen Motor (12) angetriebenen Generator (16), wobei der Generator (16) dazu ausgelegt ist, einen mehrphasigen Wechselstrom zu erzeugen, wenn er durch den kraftstoffbetriebenen Motor (12) angetrieben wird;
zwei generatorseitige Umrichter (24), die durch den Generator (16) versorgt werden;
zwei Gleichstromverbindungen (28), die mit einem Gleichstromversorgungsnetz (34) zum Versorgen des Triebfahrzeugs mit Gleichstromleistung verbindbar sind;
zwei antriebsmotorseitige Umrichter (30);
eine Mehrzahl von Antriebsmotoren (32) des Fahrzeugs, die durch die antriebsmotorseitigen Umrichter (30) versorgt werden;
**dadurch gekennzeichnet, dass**
jeder generatorseitige Umrichter (24) eine der Gleichstromverbindungen (28) versorgt, die mit einem der antriebsmotorseitigen Umrichter (30) verbunden ist;
der Generator (16) zwei galvanisch getrennte Statorwicklungssysteme (18) aufweist, wobei jedes Statorwicklungssystem (18) einen der generatorseitigen Umrichter (24) versorgt;
das Antriebssystem (10) zwei Steuerungen (42) umfasst, wobei jede Steuerung (42) dazu ausgelegt ist, einen der generatorseitigen Umrichter (24) zu steuern;
die Steuerungen (42) dazu ausgelegt sind, einander als eine übergeordnete Steuerung (42a) und eine untergeordnete Steuerung (42b) zu synchronisieren;
die übergeordnete Steuerung (42a) dazu ausgelegt ist, Messsignale von dem Antriebssystem (10) auszuwerten, Referenzsignale für Statorspannungen für beide Statorwicklungssysteme (18) zu bestimmen und Schaltsignale (46) für ihren entsprechenden generatorseitigen Umrichter (24) zu erzeugen;
die untergeordnete Steuerung (42b) dazu ausgelegt ist, sich mit der übergeordneten Steuerung (42b) zu synchronisieren, Referenzsignale für die Statorspannungen zu empfangen und Schaltsignale (46) für ihren entsprechenden generatorseitigen Umrichter (24) zu erzeugen.

2. Antriebssystem (10) nach Anspruch 1,
wobei die Statorwicklungssysteme (18) dazu ausgestaltet sind, dieselbe Ausgangsspannung zu erzeugen.

3. Antriebssystem (10) nach Anspruch 1 oder 2,
wobei die Statorwicklungssysteme (18) Phasenwicklungen (20) mit gleichen Wicklungsanzahlen aufweisen.

4. Antriebssystem (10) nach einem der vorhergehenden Ansprüche,
wobei jedes Statorwicklungssystem (18) des Generators (16) drei Phasen aufweist, die sterngeschaltet sind.

5. Antriebssystem (10) nach einem der vorhergehenden Ansprüche,
wobei die zwei Statorwicklungssysteme (18) einen elektrischen Winkel von 30° zueinander aufweisen.

6. Antriebssystem (10) nach einem der vorhergehenden Ansprüche,
wobei die Steuerungen (10) dazu ausgelegt sind, einander derart zu synchronisieren, dass sie dazu ausgelegt sind, synchronisierte Schaltsignale (46) zu erzeugen, die unterhalb 50 µs synchronisiert sind.

7. Antriebssystem (10) nach einem der vorhergehenden Ansprüche,
wobei die Steuerungen (42) mit einer ersten Datenkommunikationsleitung (48) miteinander verbunden sind, die dazu ausgelegt ist, Daten innerhalb von 50 µs zu übertragen;
wobei die Steuerungen (42) mit einer zweiten Datenkommunikationsleitung (50) miteinander verbunden sind, die für eine langsamere Datenkommunikation als die erste Datenkommunikationsleitung (48) ausgelegt ist.

8. Antriebssystem (10) nach einem der vorhergehenden Ansprüche,
wobei jede Steuerung (42) dazu ausgelegt ist, zusätzlich einen entsprechenden antriebsmotorseitigen Umrichter (30) zu steuern.

9. Antriebssystem (10) nach einem der vorhergehenden Ansprüche,
wobei der kraftstoffbetriebene Motor (12) eine weitere Steuerung (44) aufweist, die dazu ausgelegt ist, eine Ausgangsleistung (52) des kraftstoffbetriebenen Motors (12) zu steuern.

10. Antriebssystem (10) nach einem der vorhergehenden Ansprüche,
wobei der kraftstoffbetriebene Motor (12) ein Dieselmotor ist.

11. Antriebssystem (10) nach einem der vorhergehenden Ansprüche,
wobei der Generator (16) eine dreiphasige Induktionsmaschine oder eine elektrische Synchronmaschine ist.

12. Antriebssystem (10) nach einem der vorhergehenden Ansprüche,
wobei der kraftstoffbetriebene Motor (12) durch den Generator (16) startbar ist, der mit einem Wechselstrom über mindestens einen der generatorseitigen Umrichter (24) versorgt wird.

## Revendications

1. Système d'entraînement (10) pour un véhicule de traction, le système d'entraînement (10) comprenant :
un moteur mû par carburant (12) ;
une génératrice (16) entraînée par le moteur mû par carburant (12), la génératrice (16) étant adaptée à générer un courant alternatif polyphasé lorsqu'elle est entraînée par le moteur mû par carburant (12) ;
deux onduleurs (24) côté génératrice alimentés par la génératrice (16) ;
deux liaisons en courant continu (28) interconnectables à un réseau d'alimentation en courant continu (34) pour l'alimentation du véhicule de traction en énergie en courant continu ;
deux onduleurs (30) côté moteurs d'entraînement ;
une pluralité de moteurs d'entraînement (32) du véhicule alimentés par les onduleurs (30) côté moteurs d'entraînement ;
**caractérisé en ce que**
chaque onduleur (24) côté génératrice alimente l'une des liaisons en courant continu (28) qui est interconnectée à l'un des onduleurs (30) côté moteurs d'entraînement ;
la génératrice (16) est pourvue de deux systèmes d'enroulements statoriques (18) séparés galvaniquement, chaque système d'enroulements statoriques (18) alimentant l'un des onduleurs (24) côté génératrice ;
le système d'entraînement (10) comprend deux contrôleurs (42), chaque contrôleur (42) étant adapté à commander l'un des onduleurs (24) côté génératrice ;
les contrôleurs (42) sont adaptés à se synchroniser entre eux comme un contrôleur maître (42a) et un contrôleur esclave (42b) ;
le contrôleur maître (42a) est adapté à évaluer des signaux de mesure provenant du système d'entraînement (10), déterminer des signaux de référence pour des tensions statoriques pour les deux systèmes d'enroulements statoriques (18) et à générer des signaux de commutation (46) pour son onduleur (24) côté génératrice correspondant ;
le contrôleur esclave (42b) est adapté à se synchroniser avec le contrôleur maître (42b), recevoir des signaux de référence pour les tensions statoriques et à générer des signaux de commutation (46) pour son onduleur (24) côté génératrice correspondant.

2. Système d'entraînement (10) selon la revendication 1,
dans lequel les systèmes d'enroulements statoriques (18) sont conçus pour générer la même tension de sortie.

3. Système d'entraînement (10) selon la revendication 1 ou 2,
dans lequel les systèmes d'enroulements statoriques (18) sont pourvus d'enroulements de phase (20) ayant des nombres égaux d'enroulements.

4. Système d'entraînement (10) selon l'une des revendications précédentes,
dans lequel chaque système d'enroulements statoriques (18) de la génératrice (16) est pourvu de trois phases, lesquelles sont connectées en étoile.

5. Système d'entraînement (10) selon l'une des revendications précédentes,
dans lequel les deux systèmes d'enroulements statoriques (18) forment un angle électrique de 30° entre eux.

6. Système d'entraînement (10) selon l'une des revendications précédentes,
dans lequel les contrôleurs (19) sont adaptés à se synchroniser entre eux, de sorte qu'ils sont adaptés à générer des signaux de commutation synchronisés (46), lesquels sont synchronisés sous 50 µs.

7. Système d'entraînement (10) selon l'une des revendications précédentes,
dans lequel les contrôleurs (42) sont interconnectés à une première ligne de communication de données (48) adaptée à transférer des données en l'espace de 50 µs;
dans lequel les contrôleurs (42) sont interconnectés à une deuxième ligne de communication de données (50) adaptée à une communication de données plus lente que celle de la première ligne de communication de données (48) .

8. Système d'entraînement (10) selon l'une des revendications précédentes,
dans lequel chaque contrôleur (42) est adapté à commander également un onduleur (30) côté moteurs d'entraînement correspondant.

9. Système d'entraînement (10) selon l'une des revendications précédentes,
dans lequel le moteur mû par carburant (12) est pourvu d'un contrôleur supplémentaire (44) adapté à commander une puissance de sortie (52) du moteur mû par carburant (12).

10. Système d'entraînement (10) selon l'une des revendications précédentes,
dans lequel le moteur mû par carburant (12) est un moteur diesel.

11. Système d'entraînement (10) selon l'une des revendications précédentes,
dans lequel la génératrice (16) est une machine à induction triphasée ou une machine électrique synchrone.

12. Système d'entraînement (10) selon l'une des revendications précédentes,
dans lequel le moteur mû par carburant (12) est démarrable par la génératrice (16), laquelle est alimentée par un courant alternatif via au moins un des onduleurs (24) côté génératrice.
